## Europäisches Patentamt
## European Patent Office
## Office européen des brevets

(19)

(11) Publication number: **0 053 772**
**B1**

---

(12) **EUROPEAN PATENT SPECIFICATION**

---

(45) Date of publication of patent specification: **14.11.84**

(21) Application number: **81109977.9**

(22) Date of filing: **27.11.81**

(51) Int. Cl.³: **C 02 F 3/06**

---

(54) **A process for treating wastewaters.**

---

(30) Priority: **08.12.80 US 214450**

(43) Date of publication of application:
**16.06.82 Bulletin 82/24**

(45) Publication of the grant of the patent:
**14.11.84 Bulletin 84/46**

(84) Designated Contracting States:
**BE CH DE FR GB IT LI NL SE**

(56) References cited:
**GB-A-1 574 922**
**US-A-4 123 359**

(73) Proprietor: **STERLING DRUG INC.**
**90 Park Avenue**
**New York New York (US)**

(72) Inventor: **Teletzke, Gerald Howard**
**1403 Stark Street**
**Wausau Wisconsin (US)**
Inventor: **Erickson, Allen Hugh**
**2007 Douglas Drive**
**Schofield Wisconsin (US)**

(74) Representative: **Baillie, Iain Cameron et al**
**c/o Ladas & Parry Isartorplatz 5**
**D-8000 München 2 (DE)**

---

## Description

This invention relates to a process for treating wastewaters with a powdered adsorbent and one or more fixed media filters, also known as biological packed towers or trickling filters.

Fixed media filters have been commonly used for treating relatively weak wastewaters, especially in the aerobic embodiment known as the trickling filter. Typically, trickling filters are comprised of towers filled with crushed rock, field stones, wooden slats or plastic media which not only provide a large surface area for growth of biota, but whose interstitial spaces have dimensions adequate for flow of liquid downward and air upward or downward without large pressure drops or clogging with solids. Preclarification of wastes which contain solids is generally considered necessary to prevent clogging of the media void spaces. Media, such as rock, are usually 5 to 10 cm in diameter, with the larger material size prevalent in high rate filters. Recently developed plastic media provide even greater void space dimensions. Recirculation of wastewaters through the media is often provided to better maintain the biota viability and enhance the treatment level. Suggested flow diagrams can be found in Sewage Treatment Plant Design, WPCF Manual of Practice No. 8 (1977), Water Pollution Control Federation, pages 283—309. While the air flow in most trickling filter installations results from natural convection in the bed, forced aeration using blowers has also been used. See for example U.S. Patent No. 2,308,866 and U.S. Patent No. 3,966,599.

In practice, trickling filters have been unable to attain the same removal of 5-day biochemical oxygen demand (BOD5) as for instance, activated sludge systems. Their use has usually been limited to applications where effluent BOD5 of 20 to 40 mg/l is acceptable, or where partial treatment is applicable. Substantial nitrification has rarely been achieved in existing trickling filter installations. When it has occurred, denitrification in the final clarifier has often caused flotation of suspended solids and carryover into the treated wastewater effluent.

Ideally, biological solids which form on the media surfaces will naturally slough from the surfaces at the same rate as formed, to maintain a large viable population of organisms for removing wastewater constituents. In practice, however, sloughing often occurs intermittently, usually at times of overloading or when toxic materials are introduced into the wastewater. At such times, when the need for a high degree of treatment is greatest, the trickling filter loses much of its biological solids, and much reduced removals of BOD5 and suspended solids will occur and persist for long periods of time, often several weeks. Nitrification takes even longer to become re-established than carbonaceous BOD5 removal following such an upset.

The effluent quality of most trickling filter installations deteriorates under winter climatic conditions. The winter BOD5 removal is often 20—25 percent less than summertime removal.

Recent changes in some effluent standards have required removal of BOD5 to levels of 5—15 mg/l or lower, in addition to substantial nitrogen removal. Trickling filters *per se* have generally been unable to meet these standards; alternate, more expensive treatment methods have been proposed and used.

Packed columns of adsorbent such as granular activated carbon have been used for removing adsorbable components from waste streams, where only trace quantities of suspended solids are present in the waste. Even small amounts of solids will eventually clog the interstitial spaces and cause excessive headloss through beds of even the largest available carbon particles of 2 to 3 mm or larger diameter. Biological growths in or on the bed also severely restrict fluid flow and have prevented the use of carbon columns in such cases.

Upflow expanded beds have been used to eliminate plugging problems. The upward flow of liquid or liquid and air causes the carbon particles to become suspended in the mixture. Granular carbon of 0.4 to 1.7 mm particle diameter is typically used because of performance and cost advantages.

Using adsorbents such as activated carbon in mixed vessels is also known. For example, U.S. Patent No. 3,763,040 shows continuous water treatment in a plurality of tanks, where the activated carbon is transported countercurrent to the water flow.

Activated carbon is claimed to act as a catalyst to chemical oxidation under certain conditions. For example, U.S. Patent No. 2,086,753 discloses the non-biological oxidation of wastewater contaminants by sulfonated active carbon in the presence of hydrogen ion, iron and an oxygen containing gas. Also, U.S. Patent No. 3,817,862 shows oxidation of contaminants in the presence of activated carbon, independent of biological action.

More recently, combining biological oxidation with powdered activated carbon adsorption in the same mixed aerated vessel has become known from e.g. U.S. Patent Nos. 3,803,029 and 3,904,518.

Regeneration of powdered activated carbon by aerobic or anaerobic biological treatment is shown in U.S. Patent No. 3,803,029. Regeneration by wet oxidation is disclosed in U.S. Patent No. 3,442,798 and the incorporation of wet oxidation regeneration into an aerobic biological-physical treatment system is shown in U.S. Patent No. 3,977,966. In the latter disclosure, the toxic waste is wet oxidized together with spent adsorbent to degrade the toxic substances and regenerate the carbon adsorbent prior to biologically treating the wastewater in combination with adsorbent.

According to the invention, wastewater is treated to remove pollutional factors such as biochemical oxygen demand (BOD), nitrogen, color and toxic substances, using one to four fixed media filters in combination with a powdered adsorbent.

The powdered adsorbent which will remove impurities from the wastewater is added to the wastewater and the mixture is passed downward through the fixed media filters having microorganisms attached to the media. Air is passed by natural convection or forced ventilation through the filter, either upward or downward.

A portion of the adsorbent-wastewater mixture or clarified wastewater which has passed through the filter may be recycled to the filter inlet. This portion is equivalent in volume of up to 300 percent of the influent wastewater.

The adsorbent in the remaining portion of adsorbent-wastewater mixture from the fixed media filter is separated from the mixture as a concentrated slurry. The slurry is optionally recycled to the inlet of the fixed media filter where it is mixed with further portions of influent wastewater. A portion of the slurry may be removed intermittently or continuously for regeneration and recycle to the incoming wastewater. Alternatively, a portion of the slurry occasionally may be removed for disposal, particularly if disposal is less expensive than regeneration. Such disposal may be preferred for very small wastewater treatment plants where regeneration costs per ton of adsorbent are high. Part or all of the mixture from the fixed media filter may be passed to a quiescent settling-clarification zone where the settleable solids separate from the treated wastewater.

The powdered adsorbent may be any material which adsorbs contaminants from wastewater. Powdered activated carbon (PAC) of which at least one-half of the weight comprises particles of 0.03 to 0.3 mm effective diameter, is the preferred adsorbent. Other adsorbents such as fly ash, fuller's earth or diatomaceous earth may also be used.

The amount of adsorbent added may vary from 25 to 8000 mg per liter of wastewater, depending upon wastewater characteristics, discharge requirements and economics.

A portion of the adsorbent containing solids discharged from the settling-clarification zone may be recycled. A further portion may be regenerated and recycled, or disposed of. The regeneration step is preferably wet oxidation; furnace regeneration or anaerobic biological treatment may also be used.

The wastewater-adsorbent mixture may be passed serially through two, three, or four fixed media filters, each followed by a solids-liquid separator such as a settler-clarifier; where the adsorbent is passed through the system in overall countercurrent relationship to the wastewater passing from stage to stage, but in cocurrent flow within each tower, i.e., wastewater and adsorbent pass downward together through each tower.

The invention utilizing two stages comprises the steps of:

(a) passing influent wastewater downward through a first fixed media filter through which air passes by natural ventilation and having microorganisms growing on the media surface;

(b) thereafter passing the wastewater from said first fixed media filter to a first gravity settler-clarifier, removing solids thereby and forming a first stage clarified wastewater;

(c) adding to the first stage clarified wastewater from step (b) a solid powdered adsorbent capable of adsorbing impurities from said wastewater, forming a mixture thereby;

(d) passing said mixture downward through a final fixed media filter through which air passes by natural or forced ventilation and having microorganisms growing on the media surface, whereby wastewater, adsorbent, microorganisms and air are intimately contacted.

(e) thereafter separating solids from the mixture passing from said final filter in a final gravity settler-clarifier to produce a final stage clarified wastewater;

(f) thereafter adding adsorbent-containing separated solids from final gravity-clarifier to further portions of influent wastewater and passing influent wastewater and solids downward through the first fixed media filter whereby wastewater, adsorbent, microorganisms and air are intimately contacted;

(g) thereafter passing wastewater and solids from first fixed media filter in step (f) to first gravity settler-clarifier where solids are separated from the wastewater to produce a first stage clarified wastewater;

(h) continuously or occasionally passing a portion or all of separated solids from said first gravity settler-clarifier to a regeneration process where adsorbed and settled wastewater constituents and microorganisms are destroyed and the adsorptive properties of the adsorbant are restored;

(i) recycling regenerated solids from step (h) to first stage clarified wastewater of step (g) and passing the resulting mixture through the final fixed media filter in step (d);

(j) recycling a portion or all of the remaining first stage separated solids from step (g) to the inffluent wastewater in step (f);

(k) continuously or occasionally adding fresh make-up adsorbent to compensate for adsorbent losses;

(l) continuously or occasionally removing ash which builds up in the system;

(m) passing final stage clarified wastewater to a further treatment step, reuse or disposal, and

(n) repeating steps (c) through (m) in a continuous manner.

A further embodiment of this invention features 2 to 4 fixed media filters without intermediate settling-clarification zones. The powdered adsorbent accompanies the wastewater stream being treated in a generally cocurrent flow.

In further embodiments of the invention, three or four stages are utilized. As in the two-stage system, the overall movement of adsorbent is countercurrent to waste-water flow.

In the preferred mode of operation, the adsorbent, PAC, is regenerated by wet oxidation. A small concentration of short chain soluble organics is elutriated from regenerated solids and pass to the influent wastewater stream.

In a further feature of this invention, an adsorbent is passed in generally countercurrent flow through a system comprising two or more fixed media filters, each followed by a settler-clarifier. In a two stage system, the invention comprises the steps of:

(a) passing said wastewater to a primary quiescent settling-clarification zone to remove settleable solids and produce a primary clarified wastewater;

(b) passing said primary clarified wastewater downward through a first fixed media filter through which air passes by natural or forced ventilation and having microorganisms growing on the media;

(c) passing wastewater from first fixed media filter to a second quiescent settling-clarification zone to remove settleable solids and produce a first stage clarified wastewater;

(d) passing said first stage clarified wastewater downward through a second fixed media filter through which air passes by natural or forced ventilation and having microorganisms growing on the media;

(e) adding a powdered adsorbent to the wastewater passing from said second fixed media filter, forming a mixture thereby;

(f) passing mixture of wastewater from second fixed media filter and adsorbent to a final quiescent settling-clarification zone to remove settleable solids and produce a second stage clarified wastewater;

(g) passing settled solids from final quiescent settling-clarification zone to wastewater passing from first fixed media filter to said second quiescent settling-clarification zone, forming a mixture thereby;

(h) passing settled solids from second quiescent settling-clarification zone to influent wastewater passing to said primary quiescent settling-clarification zone; and

(i) passing settled solids from said primary quiescent settling-clarification zone to a recovery, regeneration or disposal step.

One or more additional intermediate stages may be added between the first and final stages, where each stage comprises a fixed media filter followed by a settling-clarification zone.

Fig. 1 is a schematic diagram of an embodiment of the invention utilizing a single stage of treatment in which passage of adsorbent through a single fixed media filter is followed by separation of solids in a settling-clarification zone.

Fig. 2 is a schematic diagram of an embodiment of the invention utilizing two treatment stages.

Fig. 3 illustrates the invention wherein three or four treatment stages are used.

Fig. 4 is a schematic diagram of an embodiment of the invention in which adsorbent passes through the settling-clarification zones of a single stage fixed media filter system.

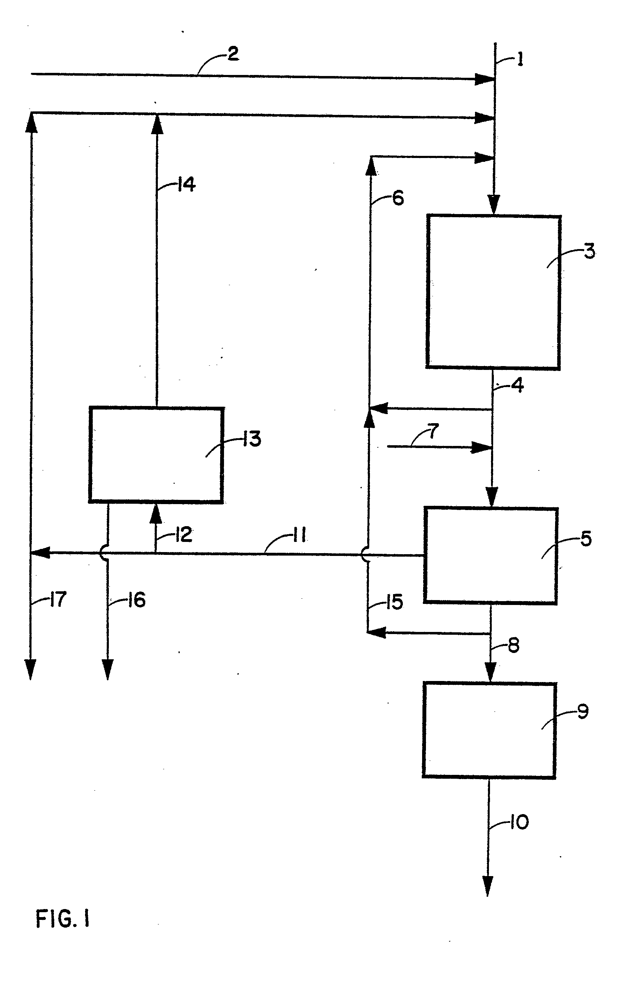

Referring now more particularly to Fig. 1 powdered adsorbent 2 preferably powdered activated carbon (PAC) is added to clarified or unclarified wastewater 1 and the mixture is passed to a fixed media filter 3. The rate of adsorbent addition depends upon the required treatment level as well as the wastewater composition and characteristics of adsorbable components in the wastewater. Normally from 200 to 6000 milligrams of fresh and recycled adsorbent are carried per liter of wastewater, but the occurrence of toxic substances in the wastewater may require quantities as great as 8000 milligrams per liter. With some wastes, adsorbent concentrations as low as 25 milligrams per liter are effective.

Although powdered activated carbon is the preferred adsorbent, the use of other adsorbents such as fly ash, fuller's earth and the like is contemplated. The adsorbent particle size which provides a high surface area for adsorption and an optimal settling rate in the settling chamber is from 30 to 300 microns (0.03 to 0.3 mm) diameter, although a portion of the adsorbent particles may have either larger or smaller diameter.

When the incoming wastewater contains a high concentration of suspended solids, preliminary solids removal will extend the adsorbent life.

The medium of filter 3 may be rock, plastic, wood, or other material resistant to biological degradation; preferably of size and shape such that a high surface area per unit volume is presented and the interstitial spaces will not easily become clogged. The medium provides surface where intimate contact of biota, adsorbent and oxygen with wastewater constituents occurs.

The film formed on the surface of the medium consists of biomass together with adsorbent which is incorporated into its structure. The ratio of the mass of biological organisms to adsorbent in the film will depend essentially upon the solids residence time of the system, the composition of the waste fed to the system, and the concentration of adsorbent fed to the incoming wastewater. The adsorbent not only aids in the removal of adsorbable material from the wastewater, but also will have the effect of substantially increasing the residence time of adsorbable and slowly biodegradable substances, the net result will be removal of impurities far exceeding the adsorptive capacity of the adsorbent for those impurities and the avoidance of large fluctuations in removal efficiency.

A portion of the adsorbent remains suspended in the wastewater and passes through the media without becoming incorportated into the surface film. The fraction of the adsorbent remaining unincorporated generally increases as the adsorbent dosage is increased. In addition, surface film solids composed of adsorbent, biota and solids from the wastewater naturally slough continuously from the media. In spite of the presence of biological solids, ash and other solids in the adsorbent-containing wastewater, it will be referred to as adsorbent-wastewater mixture.

As indicated in Fig. 1, wastewater 4 containing unincorporated adsorbent and sloughed solids issues from the fixed media filter. Preferable a portion 6 is recirculated to maintain the medium surfaces in a continuous or nearly continuous wetted state. The optimal hydraulic loading depends upon the medium characteristics, and for example, may range from 4.7 to 14 $m^3$ per day per $m^2$ for stone media, and 14 to 140 $m^3$ per day per $m^2$ for plastic media. The remainder of wastewater 4 enters a solid-liquid separation device 5, typically a quiescent settling-clarification zone or vessel. Rapid settling which results from the relatively high specific gravity of the adsorbent allows the use of a smaller settling vessel than would otherwise be required. A flocculating agent 7 may optionally be added to further aid in clarification.

Clarified wastewater 8 is optionally further treated with a particulate media filter 9 before discharge to the environment, reuse or tertiary treatment. Optionally, a portion 15 of clarified wastewater is recirculated together with or in place of the unclarified wastewater 6 to achieve the desired hydraulic loading on filter 3.

Settled solids 11 which contain both biomass and adsorbent re recirculated to the incoming wastewater 1.

When the preferred adsorbent, powdered activated carbon is used, the portion which remains in suspension provides several unique advantages, not only does it provide adsorptive capacity for toxic materials, preventing their discharge to the receiving stream or poisoning of the attached biological solids, but an additional advantage is an increased capacity for oxygen transfer in the wastewater. Thus conditions in filter 3 conducive to nitrification are enhanced, namely, greater removal of BOD in the upper portion of the filter, higher solids residence time in the surface layer allowing a greater growth of nitrifying organisms, and much reduced propensity to upset by toxic substances or overloading.

A portion 12 of the adsorbent containing solids 11 may be regenerated by biological oxidation, anaerobic digestion, thermal treatment in a furnace of wet oxidation. Biological organic solids are destroyed and the adsorbent properties are renewed in the particular process 13 which is chosen. From the standpoint of effectiveness of regeneration, ease of operation and overall cost, wet oxidation is the preferred treatment for regeneration of activated carbon. Wet oxidation is particularly effective in destroying toxic substances adsorbed on activated carbon and effectively destroys excess biological matter. Aerobic biological treatment for a period of 4 hours to 30 days, or anaerobic digestion for 10 to 60 days may be used as alternative regeneration processes.

Ash 16 which may accumulate in the system is withdrawn for disposal preferably from the regeneration step 13 or alternatively, together with other settled solids 17 without regeneration.

In trickling filters of the prior art, toxic substances or organic overloading generally have led to excessive sloughing of biological solids from the media. As a result, treatment capability has deteriorated during periods of high loading and toxic waste introduction.

In this invention, simply increasing the rate of adsorbent addition will enhance removal of toxic substances and excess organic pollutants from the wastewater. Adsorbed material are then destroyed in the regeneration process 13, and the effects of toxic materials and overloading upon the overall level of treatment will be minimal. The rate of adsorbent addition may be increased either by adding fresh absorbent or stored regenerated adsorbent, or by increasing the rate of regeneration. The latter is particularly effective when severe toxicity leads to increasing sloughing of solids from the media.

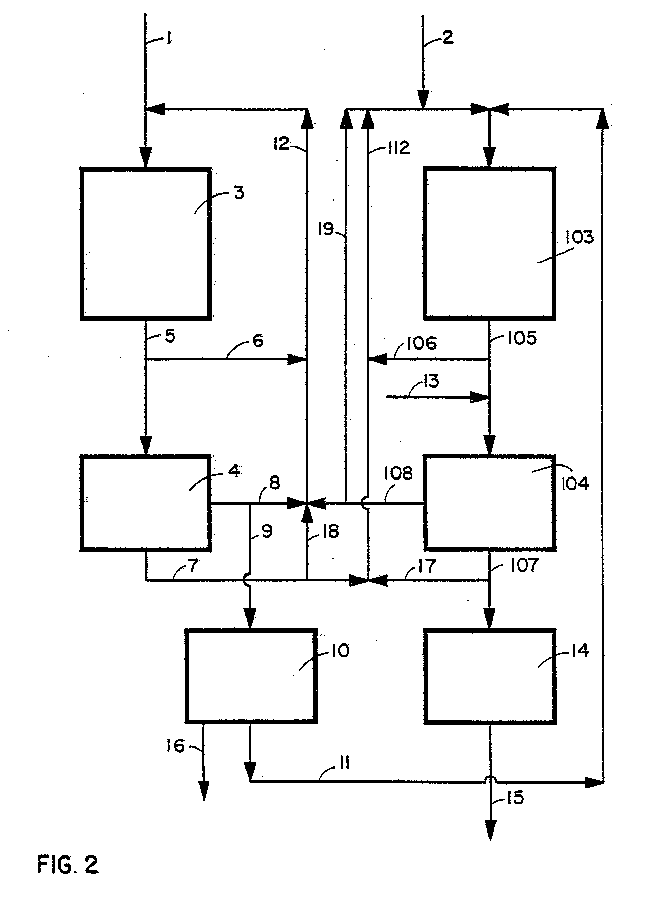

Incorporation of an additional stage into the system results in further operational advantages which are illustrated in Fig. 2. The general flow of wastewater 1 through the system, excluding recirculation streams, is through the first fixed media filter 3 and into a settler-clarification vessel 4. The clarified wastewater 7 is transported to a second fixed media filter 103, through which it passes into a second settling-clarification vessel 104. Treated and clarified wastewater 107 is discharged from this final settling-clarification vessel. If necessary, it may be passed through a particulate media filter 14 for final solids removal.

The adsorbent 2, preferably powdered activated carbon is added to the wastewater 112 entering the second filter 103. After the initial addition, only small additions of fresh adsorbent are necessary to maintain the desired concentration in the wastewater. Effluent wastewater 105 containing adsorbent and sloughing biomass is clarified in solid-liquid separation device 104, typically a settling-clarification vessel. A flocculating agent 13 may be added to enhance clarification. A portion 106 of the solids containing wastewater 105 is preferably recirculated to the wastewater 112 entering the second tower, thereby maintaining the medium in the necessary wetted state. Optionally, a portion 17 of clarified wastewater 107 may be recirculated in addition to or in place of the recirculated unclarified wastewater 106. This practice is typically followed when an excessive concentration of sloughed solids will otherwise be returned to the fixed media filter.

In Fig. 2, the adsorbent containing solids 108 from settling-clarification vessel 104 are combined with settled solids 8 and added to wastewater 1 entering the first filter 3. Thus the suspended adsorbent is moved in overall countercurrent relationship to the wastewater flow, achieving more efficient use of the adsorbent capacity.

Effluent mixture 5 from the first fixed media filter 3 is partially recirculated as stream 6 to the incoming wastewater 1, as previously indicated. The remainder enters the settling-clarification vessel 4 where adsorbent and biological solids are separated from wastewater. A portion 9 of these solids is regenerated by a process 10 of aerobic biological oxidation, anaerobic digestion, thermal treatment in a furnace, or wet oxidation. Wet oxidation is the preferred treatment process. The regenerated solids 11 are returned to the wastewater 112 entering the second filter 103. Optionally, a portion 18 of the clarified wastewater 7 may be recirculated to the incoming wastewaters 1 in addition to or in place of the unclarified wastewater 6. This action is typically taken when necessary to prevent a temporary overload of solids to filter 3 caused by excessive sloughing of solids.

Ash 16 which accumulates in the system is withdrawn for disposal preferably from the regeneration step or alternatively, with other settled solids from settling-clarification vessel 4. Without separation of adsorbent from ash, a small quantity of adsorbent will be lost with the ash.

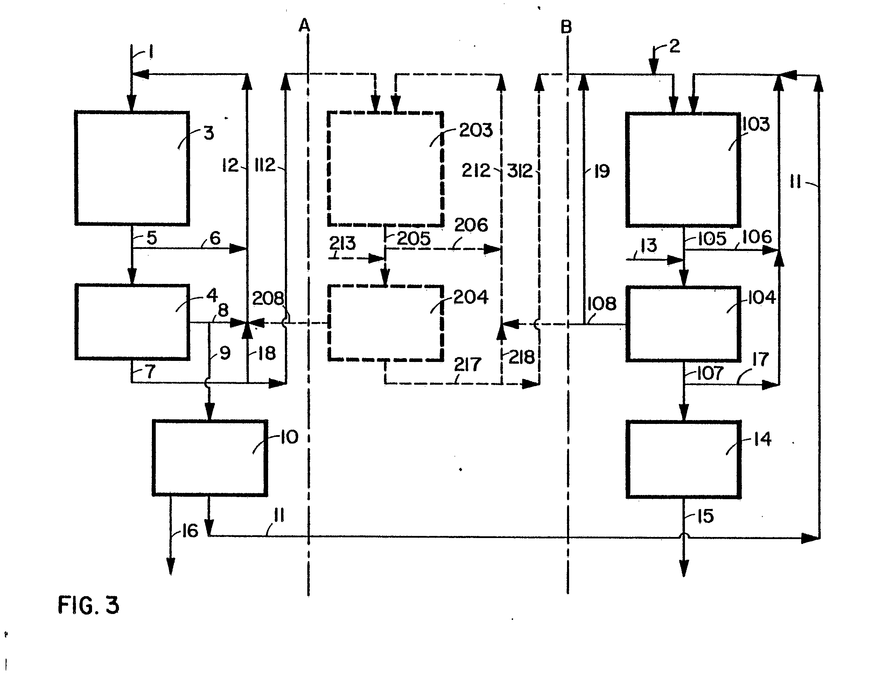

While the foregoing is illustrative of a two stage system employing two fixed media filters, each followed by a solid-liquid separator, embodiments having three, four or more stages are also contemplated where one, two or more sets of filter-separator combinations are interposed between the first stage and final stage of Fig. 2, and separated solids are passed in stagewise counter-current flow to wastewater through the interposed and final stages. In Fig. 3, such an arrangement is illustrated by the addition of an intermediate stage drawn between vertical lines A and B. Alternatively two or more such intermediate stages could be used.

In Fig. 3, clarified wastewater 112 from the first stage is combined with separated solids 108 from the final stage and passed through fixed media filter 203 and solid-liquid separator 204. Separated solids 208 are passed to the first stage and clarified wastewater 217 is passed to the final stage. Alternatively a portion 206 of solids and wastewater 205 or a portion 218 of clarified wastewaters 217 is recycled to the waterwater 112 entering the filter.

When the total system is operated as just described, most of the carbonaceous BOD5 removal will occur in the first filter, providing conditions conducive to proliferation of nitrifying bacteria in the second filter. Enhanced oxygen transfer capability resulting from the use of activated carbon will lead to a high degree of nitrification. If necessary during organic overloading, an oxygen containing gas may be injected into the first filter to prevent oxygen deficiency.

In prior art systems not using an adsorbent, limited denitrification of nitrate and nitrite ions to nitrogen gas often occurs in the settling-clarification vessels, lifting the mass of solids to the surface and causing solids to carry over into the treated wastewater. This unhappy predicament is prevented by using a highly settleable adsorbent of this invention, which will allow nitrogen gas bubbles to escape without carrying the solids upward.

This invention is particularly effective for treating toxic wastes. When toxic substances occasionally appear in the wastewater the concentration of adsorbent can quickly and easily be increased to accommodate the toxic materials. Following the period of abnormal wastewater characteristics, the excess spent adsorbent is regenerated and stored for future use. For example, regenerated powdered activated carbon may be dewatered by filter press or other filter to greater than 50 percent solids and stored as a wet solid, or further dried and stored as a dry powder.

Fresh or regenerated adsorbent is added to the final fixed media filter, thereby adsorbing the last traces of toxic material and preventing harm to receiving waters.

Wet oxidation is the preferred regeneration process when wastewater contains toxic substances, because it effectively destroys a wide variety of such substances.

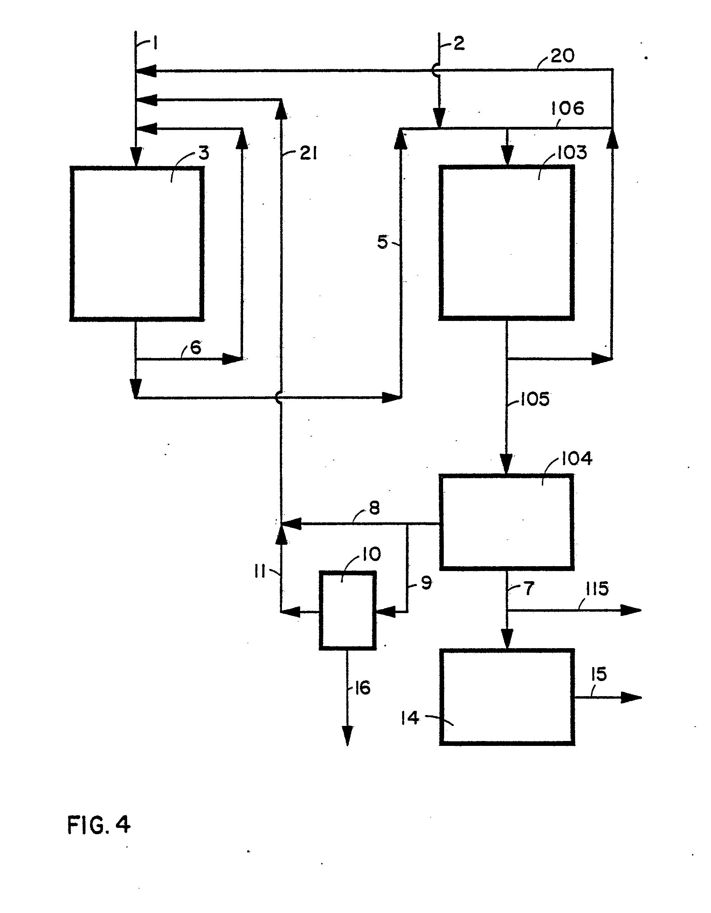

Turning now to Fig. 4, we see two stages 3 and 103 of fixed media filter with a single final clarification-settling zone 104. While two stages are shown, a total of three or more stages may be utilized with a single final settling-clarification zone.

In Fig. 4, influent wastewater 1 passes serially through fixed media filters 3 and 103 and enters the settling-clarification zone 104. treated and clarified wastewater 115 is discharged or is preferably filtered in granular medium (sand) filter 14 and discharged as stream 15 to a further treatment step, reuse or disposal.

Powdered adsorbent 2 is initially added to wastewater stream 5 entering the second treatment stage 103. A portion 106 of the wastewater adsorbent mixture passing from filter 103 is recycled to the same filter.

Adsorbent containing settled solids from settler-clarifier 104 passes to a regeneration step 10 and regenerated adsorbent 11 is passed to influent wastewater 1. A portion 8 of unregenerated adsorbent may be passed directly to wastewater 1. Alternatively, a portion 20 of the wastewater-adsorbent mixture 105 from the second fixed media filter may be recycled to the influent wastewater 1. Thus, adsorbent passes through both stages and is internally recycled within each stage as stream 6 and 106. The total adsorbent concentration in the wastewater, including recirculated adsorbent 8, 11 and 20 is maintained at a desired level within the range of 25—8000 mg/l.

Ash components 16 may be removed in the regeneration step, extending the useful life of the adsorbent.

Example 1

A continuous pilot plant system was constructed according to the configuration of Fig. 1. The 25 cm diameter packed tower was filled to a depth of 25 cm with fixed media comprising 2,5 cm saddle packing. The clarifier was 20 cm in diameter and the sand filter provided 0,023 m² of area with a bed depth of 12,7 cm. Powdered activated carbon particle size such that 70 percent passed through a 325 mesh screen was added as the adsorbent. Spent carbon was regenerated by wet oxidation in a stirred autoclave.

A municipal wastewater which was resistant to biological treatment was introduced at 150 ml per minute. Powdered carbon was initially added to achieve a concentration of about 6700 mg/l in the wastewater. A portion 6 of the mixture 4 draining from the packed tower in volume equal to the influent wastewater, was recycled to the packed tower inlet. The remaining mixture of wastewater and carbon from the packed tower was passed to a clarifier 5 where the carbon solids were separated. The clarified wastewater was then passed through a sand filter to remove remaining particulate matter.

Clarifier underflow solids 11 were recycled to the packed tower inlet at a rate of 75 ml per minute. The total hydraulic loading on the packed tower was 4.3 m³ per m² per day.

Approximately 3 percent of the total carbon in the system was regenerated each day and returned to the wastewater influent.

During the test period of 46 days, 5-day Biochemical Oxygen Demand (BOD) of the wastewater was reduced from 48 mg/l to 11 mg/l following clarification and to 7.5 mg/l after sand filtration. A full scale fixed media filter operating at the same loading, but without the addition of adsorbent, reduced the wastewater BOD in the same period to 18 mg/l. A sand filter was not used with the full scale system.

Example 2

In a process according to Fig. 2 wastewater 1 is passed through two fixed media filters 3 and 103, each of which is followed by solids-liquid separation in a clarification device.

Wastewaters 6 and 106 containing suspended solids are recycled at an average volumetric recycle ratio of 2 parts recycled wastewater per part of influent wastewater.

Powdered adsorbent is added to the wastewater entering the second fixed filter in order to maintain an adsorbent concentration of 5000 mg/l in the wastewater entering the first fixed media filter.

For a wastewater flow of 1135 m³ per day, 2270 m³ per day of solids containing wastewater from the first filter is recycled. In the clarification device 4, preferably a gravity clarifier, solids are settled to a concentrated slurry 8 of about 113,5 m³ per day. Five percent of this stream is regenerated, and the remainder is recycled to the influent wastewater 1.

Clarified wastewater 7 is combined with fresh adsorbent 2 or regenerated adsorbent 11 and passed through a second filter 103. Wastewater containing suspended solids exiting from the filter is recirculated to the filter top at a recycle ratio of 2. The remaining wastewater is separated and clarified in gravity clarifier 104. A chemical 13 such as alum or polymeric agent may be added to enhance clarification. The treated and clarified wastewater 107 is passed through a sand filter 14 to remove small concentrations of suspended solids. A concentrated slurry 108 of adsorbent from clarifier 104 is passed to the inlet of the first fixed media filter 3.

With an influent wastewater flow of 1135 m³ per day, the total flow through the first fixed media filter, including recycle, is 3518 m³ per day. Approximately 17.700 kg per day of absorbent are carried through the filter. The adsorbent concentration in the wastewater passing through the second filter is 5 percent (i.e., 250 mg/l) of that in the first filter, and totals 885 kg per day.

Thus the adsorbent is transported through the system in stagewise countercurrent flow with the wastewater although the flow within each fixed media filter is cocurrent. A high concentration of partially exhausted adsorbent is maintained in the wastewater passing through the first filter, and a lower concentration of fresh or regenerated adsorbent is maintained through the second filter.

**Claims**

1. A process for treating wastewaters, characterized by

passing influent wastewater downward through a fixed media filter through which air passes by natural or forced ventilation and having microorganisms attached to the media, adding a powdered adsorbent capable of absorbing impurities from said wastewaters before passing said wastewater through said fixed media filter and

separating said absorbent from said mixture after passage through the fixed media filter to produce a treated and clarified wastewater.

2. A process according to claim 1, characterized in that said separation of adsorbent is by passing said mixture from the fixed media filter to a quiescent settling-clarification zone where the settleable solids separate from the treated wastewater.

3. A process according to claim 1 or 2, characterized by the further step of passing said treated and clarified wastewaters downward through a second fixed media filter wherein the treated and clarified wastewaters are intimately contacted with air and microorganisms.

4. A process according to any one of claims 1 to 3, characterized by the further step of passing the treated and clarified wastewaters through a particulate media filter.

5. A process according to any one of claims 2 to 4, characterized by the further step of recycling a portion or all of separated settleable solids to influent wastewater.

6. A process according to any one of claims 1 to 4, characterized by the further steps of:

passing a portion or all of said settled solids to a regeneration process where adsorbed and settled wastewater constituents are destroyed and the adsorptive properties of the adsorbent are restored; and

recycling the thus regenerated adsorbent to influent wastewater.

7. A process according to any one of claims 3 to 6, characterized by one or two like additional treatment stages, interposed between first and final stages, in each stage wherein clarified wastewaters from a prior stage and separated solids from a following stage are together passed downward through a fixed media filter and thereafter separated; separated solids are passed to wastewater entering a previous stage, and clarified wastewater is passed to a following stage.

8. A process according to any one of claims 1 to 7, characterized in that said fixed media filter is replaced by 2 to 4 fixed media filters placed in series without intermediate clarification between the filters.

9. The process according to claim 7 or 8, characterized by

passing settled solids from a clarification zone to a regeneration step wherein the adsorptive properties of the adsorbent are at least partially restored and other organic solids are destroyed; and

recycling solids from the regeneration step to wastewater passing from a prior fixed media filter.

10. A process according to any one of claims 1 to 9, characterized by the further step of recycling a portion of said treated and clarified wastewater in volume equivalent of up to 300 percent of the influent wastewater.

11. A process according to any one of claims 1 to 10, wherein the process is a continuous one.

**Patentansprüche**

1. Verfahren zum Behandeln von Abwässern, dadurch gekennzeichnet, daß

zufließendes Abwasser abwärts durch ein Filter mit festgelegtem Filtermedium geführt wird, durch das Luft durch natürliche oder erzwungene Belüftung tritt und an dem Mikroorganismen angebracht sind, daß vor dem Hindurchführen des Abwassers durch das Filter mit festgelegtem Filtermedium ein pulverförmiges Adsorbens zugesetzt wird, das geeignet ist, Verunreinigungen aus den Abwässern zu adsorbieren, und daß

nach dem Durchtritt des Gemisches durch das Filter mit festgelegtem Filtermedium das Adsorbens von dem Gemisch abgetrennt und dadurch ein behandeltes und geklärtes Abwasser erhalten wird.

2. Verfahren nach Anspruch 1, dadurch gekennzeichnet, daß zum Abtrennen des Adsorbens das Gemisch von dem Filter mit festgelegtem Filtermedium einer beruhigten Absetz- und Klärzone zugeführt wird, in der sich die absetzfähigen Feststoffe aus dem behandelten Abwasser abtrennen.

3. Verfahren nach Anspruch 1 oder 2, dadurch gekennzeichnet, daß in einem weiteren Schritt die behandelten und geklärten Abwässer abwärts durch ein zweites Filter mit festgelegtem Filtermedium geführt werden, in dem die behandelten und geklärten Abwässer mit Luft und Mikroorganismen in innige Berührung gebracht werden.

4. Verfahren nach einem der Ansprüche 1 bis 3, dadurch gekennzeichnet, daß in einem weiteren Schritt die behandelten und geklärten Abwässer durch ein Filter aus einem feinteiligen Filtermedium geführt werden.

5. Verfahren nach einem der Ansprüche 2 bis 4, dadurch gekennzeichnet, daß in einem weiteren Schritt alle agbetrennten absetzfähigen Feststoffe ganz oder teilweise zu dem zufließenden Abwasser zurückgeführt werden.

6. Verfahren nach einem der Ansprüche 1 bis 4, dadurch gekennzeichnet, daß in weiteren Schritten

die abgesetzten Feststoffe ganz oder teilweise einer Regenerierung zugeführt werden, in der adsorbierte und abgesetzte Abwasserbestandteile zerstört werden und die Adsorptionsfähigkeit des Adsorbents wiederhergestellt wird, und

das auf diese Weise regenerierte Adsorbens zu dem zufließenden Abwasser zurückgeführt wird.

7. Verfahren nach einem der Ansprüche 3 bis 6, dadurch gekennzeichnet, daß zwischen einer ersten und einer letzten Behandlungsstufe eine oder zwei gleiche zusätzliche Behandlungsstufen durchgeführt werden und in jeder Stufe geklärte Abwässer von einer vorhergehenden Stufe und abgetrennte Feststoffe von einer folgenden Stufe zusammen abwärts durch ein Filter mit festgelegtem Filtermedium geführt und danach voneinander getrennt werden, worauf abgetrennte Feststoffe dem Abwasser zugeführt werden, das in eine vorhergehende Stufe eintritt, und geklärtes Abwasser einer folgenden Stufe zugeführt wird.

8. Verfahren nach einem der Ansprüche 1 bis 7, dadurch gekennzeichnet, daß das Filter mit festgelegtem Filtermedium durch 2 bis 4 Filter mit festgelegtem Filtermedium ersetzt wird, die hintereinandergeschaltet sind, ohne daß zwischen den Filtern eine Zwischenklärung erfolgt.

9. Verfahren nach Anspruch 7 oder 8, dadurch gekennzeichnet, daß

abgesetzte Feststoffe aus einer Klärzone einer Regenerierung zugeführt werden, in der die Adsorptionsfähigkeit des Adsorbens mindestens teilweise wiederhergestellt wird und andere organische Feststoffe zerstört werden und

Feststoffe von der Regenerierung zu einem Abwasser zurückgeführt werden, das aus einem vorhergehenden Filter mit festgelegtem Filtermedium austritt.

10. Verfahren nach einem der Ansprüche 1 bis 9, dadurch gekennzeichnet, daß in einem weiteren Schritt ein im Volumen bis zu 300 Prozent des zufließenden Abwassers äquivalenter Teil des behandelten und geklärten Abwassers zurückgeführt wird.

11. Verfahren nach einem der Ansprüche 1 bis 10, dadurch gekennzeichnet, daß das Verfahren Kontinuierlich durchgeführt wird.

**Revendications**

1. Procédé de traitement d'eaux usées, caractérisé en ce qu'il consiste:

à faire passer les eaux usées entrantes de haut en bas sur un filtre à milieu fixe à travers lequel de l'air circule par ventilation naturelle ou forcée et ayant des microorganismes fixés sur le milieu, à ajouter un adsorbant pulvérulent capable d'adsorber les impuretés contenues dans les eaux usées avant que ces eaux ne traversent le filtre à milieu fixe, et

à séparer l'adsorbant du mélange après les passage à travers le filtre à milieu fixe, de manière à obtenir des eaux usées traités et clarifiées.

2. Procédé selon la revendication 1, caractérisé en ce que la séparation de l'adsorbant se fait en faisant passer le mélange provenant du filtre à milieu fixe dans une zone de sédimentation-clarification non-agitée où les solides decantable se séparent des eaux usées traitées.

3. Procédé selon la revendication 1 ou 2, caractérisé en ce qu'il comprend une autre opération qui consiste à faire passer les eaux traitées et clarifiées de haut en bas à travers un second filtre à milieu fixe dans lequel les eaux usées traitées et clarifiées sont mises intimement en contact avec le l'air et des microorganismes.

4. Procédé selon l'une quelconque des revendications 1 à 3, caractérisé en ce qu'il comprend une autre opération qui consiste à faire passer les eaux usées traitées et clarifiées à travers un filtre à milieu particulaire.

5. Procédé selon l'une quelconque des revendications 2 à 4, caractérisé en ce qu'il comprend une autre opération qui consiste à recycler une partie ou la totalité des solides décantables séparés vers les eaux usées chargées.

6. Procédé selon l'une quelconque des revendications 1 à 4, caractérisé en ce qu'il comprend d'autres opérations qui consistent:

à faire passer une partie ou la totalité des solides décantés à un procédé de régénération où les constituants adsorbés et décantés des eaux usées sont détruits et les propriétés adsorbantes de l'adsorbant sont restaurées; et

á recycler l'adsorbant ainsi régénére vers les eaux usées chargées.

7. Procédé selon l'une quelconque des revendications 3 à 6, caractérisé en ce qu'il comprend un ou deux autres stades de traitement additionnels semblables, interposées entre le premier stade et le stade final, dans chacun des stades les eaux usées clarifiées provenant d'un stage antérieur et les solides séparés provenant d'un stade ultérieur traversant ensemble de haut en bas un filtre à milieu fixe, puis étant séparés; les solides séparés étant renvoyés dans les eaux usées pénétrant dans un stade antérieur, et les eaux usées clarifiées étant renvoyées vers un étage ultérieur.

8. Procédé selon l'une quelconque des revendications 1 à 7, caractérisé en ce que le filtre à milieu fixe est remplacé par de 2 à 4 filtres à milieu fixe disposés en série, sans clarification intermédiaire entre les filtres.

9. Procédé selon la revendication 7 ou 8, caractérisé en ce qu'il consiste:

à faire passer les solides provenant d'une zone de clarification à une opération de régénération dans laquelle les propriétés adsorbantes de l'adsorbent sont au moins partiellement restaurées et d'autres solides organiques sont détruits; et

à recycler les solides provenant de l'opération de régénération vers les eaux usées provenant d'un filtre à milieu fixe antérieur..

10. Procédé selon l'une quelconque des revendications 1 à 9, caractérisé en ce qu'il comprend une autre opération qui consiste à recycler une partie des deux usées traitées et clarifiées en un volume pouvant atteindre 300% des eaux usées entrantes.

11. Procédé selon l'une quelconque des revendications 1 à 10, caractérisé en ce qu'il est effectué en continu.

FIG. I

FIG. 2

FIG. 3

FIG. 4